# EUROPEAN PATENT APPLICATION

(11) **EP 1 918 658 A2**
(43) Date of publication of application: **07.05.2008**
(21) Application number: 07020501.8
(22) Date of filing: 19.10.2007
(51) Int. Cl.: F24F 13/28, B01D 46/24

(54) **Air conditioner**

(30) Priority: 25.10.2006 JP 2006290158
(71) Applicant: MITSUBISHI ELECTRIC CORPORATION, Chiyoda-ku Tokyo 100-8310 (JP)
(72) Inventor: Morioka, Reiji, Tokyo 100-8310 (JP)
(74) Representative: Pfenning, Meinig & Partner GbR

(57) **Abstract**

The present invention aims to provide an air conditioner at low price for realizing reduction of power consumption and the maximum air cleaning ability of the air conditioner at the same time, which reduces pressure loss without changing a hole diameter of air vents of the filter having a minimum volumetric capacity. The present invention is characterized in that an air inflow angle θ1 into a filter of indoor air flowing into an air cleaning filter 2 is equal to or less than 70 degrees, and air vents of the air cleaning filter incline at 20 to 70 degrees (skew angle θ2 of the filter air vent) in an inflow direction of the indoor air flowing into the air cleaning filter.

## Description

### BACKGROUND OF THE INVENTION

### Field of the Invention

The present invention relates to an air conditioner including an air cleaning filter. More specifically, the present invention relates to an air conditioner including an air cleaning filter of which air cleaning ability is improved by making an inflow angle of air into the air cleaning filter close in value to an airflow angle in an air vent of the air cleaning filter.

### Background Art

As an air cleaning filter used for a conventional air conditioner, it is common to use a filter with a honeycomb structure of which a ventilation resistance is smaller than that of a nonwoven fabric, etc. to prevent deterioration of basic performances of the air conditioner, such as cooling or heating.

### Description of the Related Art

The ventilation resistance of the filter with the honeycomb structure of an air cleaning device is around 3 to 10 Pa (pascal) at an airflow rate of 1 m/s. It is considered to be easy and preferable to enlarge a hole diameter of air vents so as to further lower the ventilation resistance (For example, refer to the Japanese unexamined patent publication JP05-337313 (page 4, Fig. 1 and Fig. 7)).

In an air cleaning filter used for a conventional air conditioner, a hole diameter of the air vents is enlarged to reduce the ventilation resistance and to prevent deterioration of basic performances of the air conditioner, such as cooling or heating.

In recent years, however, there has been an increasing demand for high air cleaning ability also in the field of air conditioners. The air cleaning ability such as dust collection and deodorizing ability is generally given by the product of a volume of passing air that is treated, and a transient removal efficiency. To enlarge the hole diameter of the air vents results in decrease of a contact area of a filter with polluted air, so that the transient removal efficiency is significantly deteriorated. As a result, there is a problem that the air cleaning ability is deteriorated.

Alternatively, it is preferable to orient the inflow angle of air in a vertical direction (at 90 degrees) to an inflow surface of the air cleaning filter to prevent pressure loss at a wall surface of the filter. However, in a recent air conditioner, air is suctioned mainly from a top panel direction, not from a front surface of a front grille with a view of design improvements. Therefore, the inflow angle of air to the inflow surface of the air cleaning filter fixed upstream of a heat exchanger is less than 90 degrees, which does not correspond to an airflow angle of air vents 8.

When a difference between the inflow angle of air to the inflow surface of the air cleaning filter and the airflow angle of the air vents of the air cleaning filter is no less than 20 degrees, the pressure loss of the filter increases to an unignorable level. When the pressure loss of the filter increases, power consumption of the air conditioner itself is adversely affected. Further, the air volume passes through the filter decreases. Therefore, as a result, the air cleaning ability is deteriorated.

Further, under a harsh condition that the inflow angle of air to the inflow surface of the air cleaning filter is less than 45 degrees, air skims the surface of the filter, and it is difficult for air to flow into the filter itself.

As shown above, to obtain the highest air cleaning ability, it is simply necessary to reduce a hole diameter of the air vents of the air cleaning filter, and to tilt the airflow angle of the air vents of the air cleaning filter to correspond to the inflow. angle of air into the air cleaning filter. However, when the airflow angle of the filter is tilted, blocked parts where air does not pass through are generated at a top surface and a bottom surface of the air cleaning filters. Thus, it is necessary to increase the size of the filter to obtain a degree of performance. Since pricing on the filter usually depends on the volumetric capacity of the filter, the price of the filter is increased.

### SUMMARY OF THE INVENTION

The present invention aims to solve the above-mentioned problems, and it is one of the purposes of the present invention to provide an air conditioner at low price for realizing reduction of power consumption and the maximum air cleaning ability in the air conditioner at the same time, which reduces pressure loss without changing a hole diameter of air vents of the filter having the minimum volumetric capacity.

The air conditioner according to the present invention including:
a heat exchanger to condition indoor air; and
an air cleaning filter having a honeycomb structure that is formed by linking a plurality of air vents, the air cleaning filter being located upstream of the heat exchanger, wherein
an inflow angle of the indoor air flowing into the air cleaning filter is acute, and
the plurality of air vents of the air cleaning filter incline in an inflow direction of the indoor air flowing into the air cleaning filter.

### BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:
Fig. 1 shows a first embodiment and is a cross-sectional view of a air conditioner 50;
Fig. 2 shows the first embodiment and is a front view of the air conditioner 50;
Fig. 3 shows the first embodiment and is a cross-sectional view (side view) of a air cleaning filter 2;
Fig. 4 is a cross-sectional view (side view) of a conventional air cleaning filter 20 shown for comparison;
Fig. 5 shows the first embodiment and is a diagram showing a relation between a skew angle θ2 of a filter air vent and a power consumption increase of the air conditioner 50 when an air inflow angle θ1 into the filter is 30 degrees and an overall air volume of the air conditioner 50 is 16.9 m³/min;
Fig. 6 shows the first embodiment and is a cross-sectional view of a air blocked part 30 of the air cleaning filter 2;
Fig. 7 shows the first embodiment and is a diagram showing a relation of skew angles at a filter top 10 and a filter bottom 9 to air cleaning ability when the skew angle θ2 of the filter air vent is 45 degrees under a same filter volume;
Fig. 8 shows the first embodiment and is a cross-sectional view of an air cleaning filter retaining frame 3; and
Fig. 9 shows the first embodiment, and is an enlarged front view of air vents 8 of the air cleaning filter 2.

### DESCRIPTION OF THE PREFERRED EMBODIMENT

### Embodiment 1.

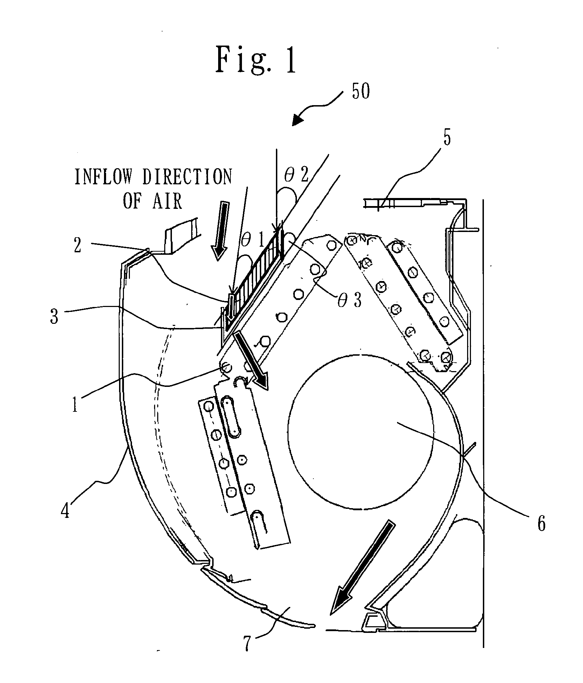

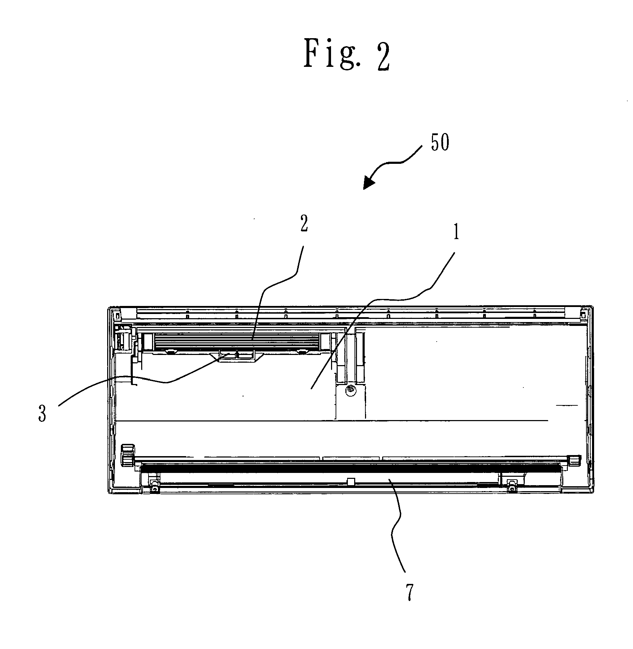

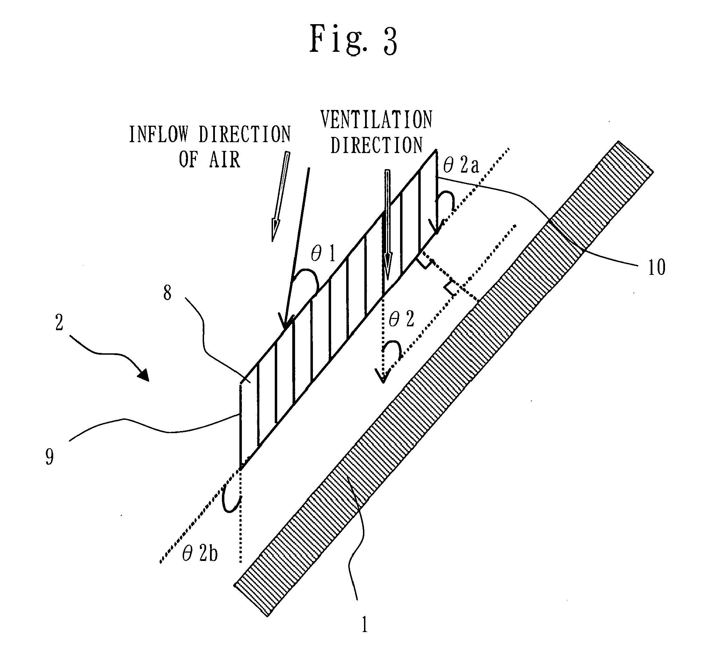

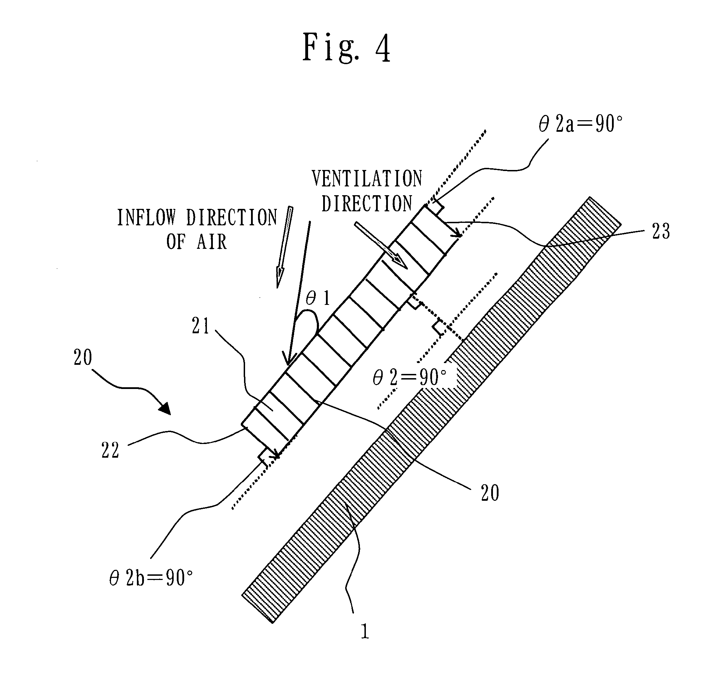

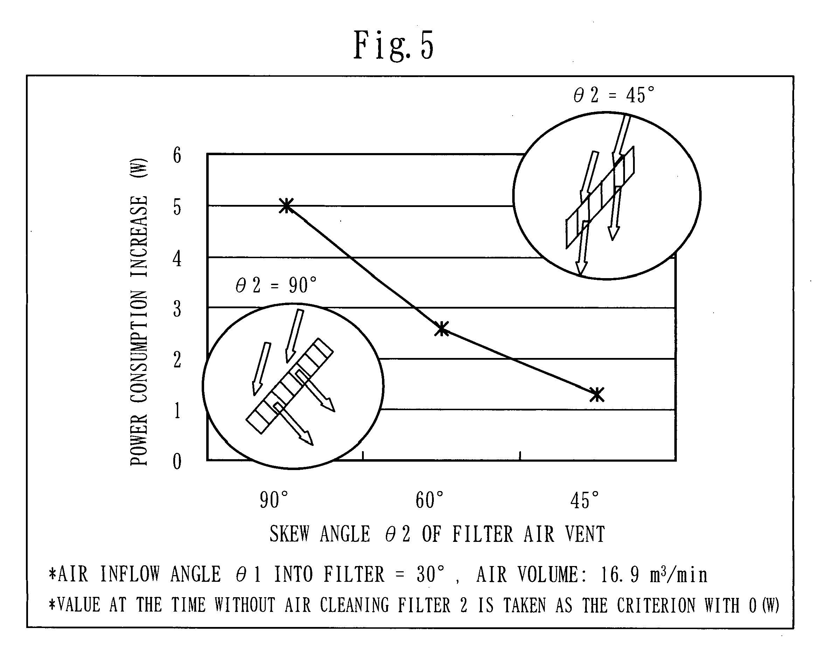

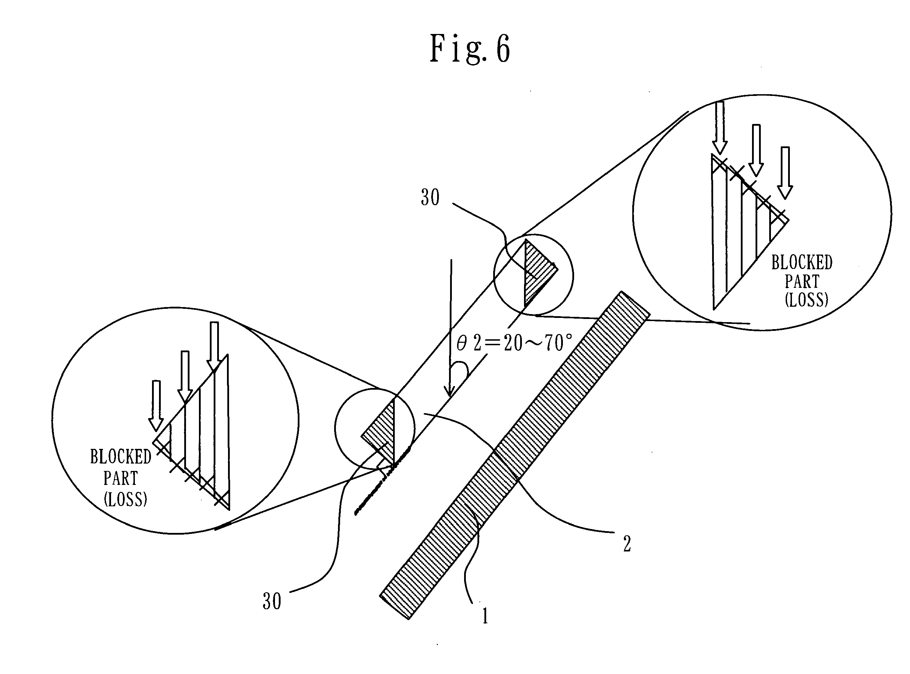

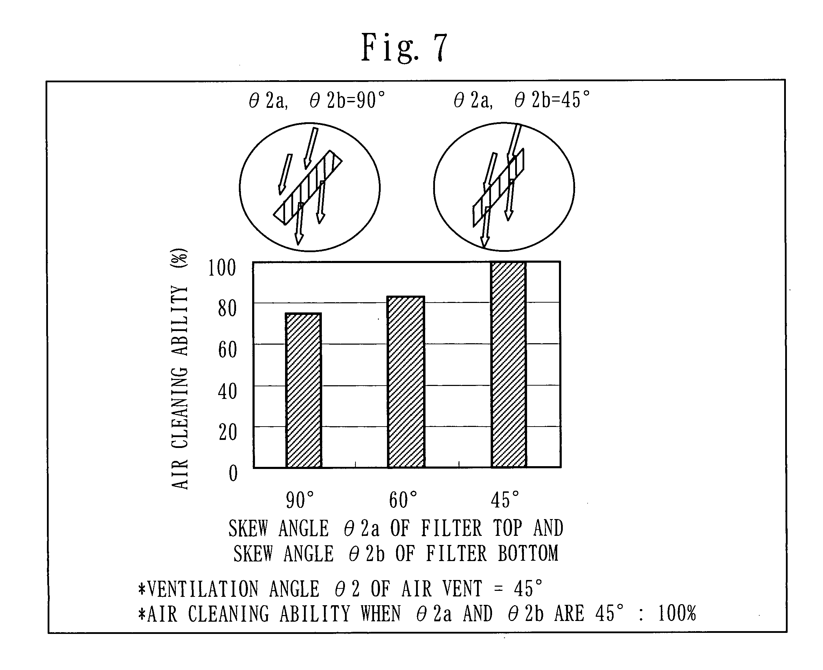

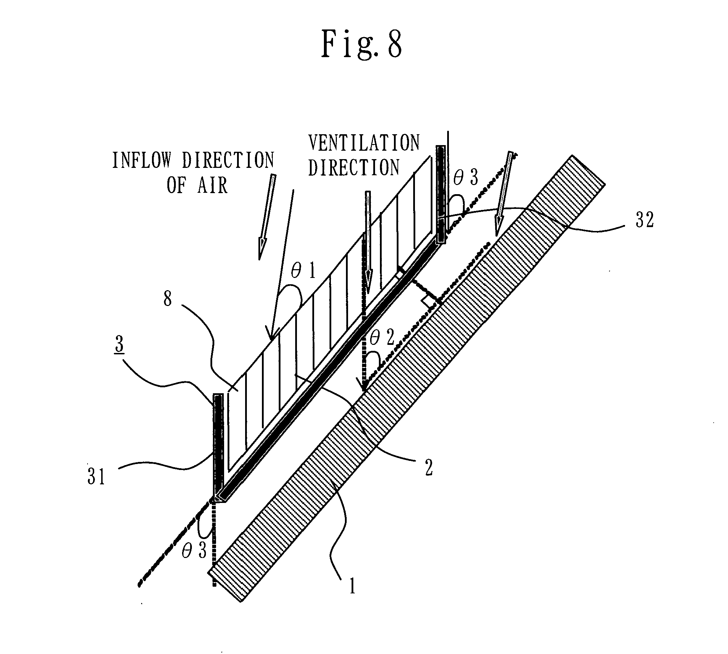

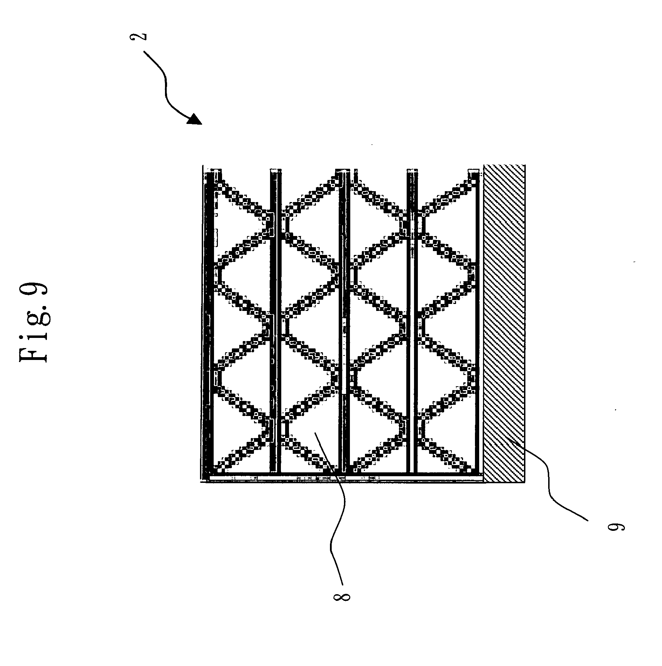

Fig. 1 through Fig. 9 except Fig. 4 are diagrams describing the first embodiment: Fig. 1 is a cross-sectional view of an air conditioner 50; Fig. 2 is a front view of the air conditioner 50; Fig. 3 is a cross-sectional view (side view) of an air cleaning filter 2; Fig. 5 is a diagram showing a relation between a skew angle θ2 of a filter air vent and a power consumption increase of the air conditioner 50 when an air inflow angle θ1 into the filter is 30 degrees and an overall air volume of the air conditioner 50 is 16.9 m³/min; Fig. 6 is a cross-sectional view of an air blocked part 30 of the air cleaning filter 2; Fig. 7 is a diagram showing a relation of skew angles at a filter top 10 and a filter bottom 9 to an air cleaning ability when the skew angle θ2 of a filter air vent is 45 degrees under a same filter volume; Fig. 8 is a cross-sectional view of an air cleaning filter retaining frame 3; and Fig. 9 is an enlarged front view of air vents 8 of the air cleaning filter 2. Fig. 4 is a cross-sectional view (side view) of a conventional air cleaning filter 20 shown for comparison.

As described in Fig. 1, the air conditioner 50 (indoor unit) includes the air cleaning filter 2 (may be simply called a filter below) having a honeycomb structure, and the air cleaning filter retaining frame 3 for retaining the air cleaning filter 2, located upstream of an inverted V-shaped heat exchanger 1.

The air cleaning filter 2 is retained inside of the air conditioner 50 by the air cleaning filter retaining frame 3 separately provided upstream of the heat exchanger 1, or the air cleaning filter retaining frame 3 integrally formed with a panel, as described in the overall front view of the air conditioner 50 in Fig. 2, for example.

Further, indoor air is suctioned mainly from a direction of a top panel 5, not from a front surface of a front grille 4 with a view of design improvements. Then by a fan 6, the suctioned indoor air is made to pass through the air cleaning filter 2 and the heat exchanger 1 to be conditioned (cooled or heated, etc.), and then blown out into a room from a blowout opening 7.

Indoor air flows into the air cleaning filter 2 at the air inflow angle θ1 into the filter from the upstream of the air cleaning filter 2. The air vents 8 of the air cleaning filter 2 penetrate in a direction of the skew angle θ2 of the filter air vent with respect to an inflow surface of the air cleaning filter 2.

As described in Fig. 3, the filter top 10 of the air cleaning filter 2 inclines at a skew angle θ2a of the filter top with respect to the inflow surface of the air cleaning filter 2. Further, the filter bottom 9 of the air cleaning filter 2 inclines at a skew angle θ2b of the filter bottom.

In this case, as shown in Fig. 1, the air cleaning filter retaining frame 3 is formed in accordance with shapes of the filter top 10 and the filter bottom 9 of the air cleaning filter 2, and the filter top 10 of the air cleaning filter 2 inclines at a skew angle θ3 of the filter retaining frame with respect to the inflow surface of the air cleaning filter 2.

Next, an explanation about operations is presented.
The air cleaning filter 2 plays a role of cleaning air passing through the air cleaning filter 2 from the upstream to the downstream.

The air cleaning filter 2 has a honeycomb structure formed by linking a plurality of the penetrating air vents 8 (see Fig. 2 and Fig. 9), so as to prevent pressure loss in the air conditioner 50. The air vents 8 have shapes of triangle, quadrangle or hexagon, for example.

For a honeycomb filter forming the honeycomb structure of the air cleaning filter 2, an inorganic or organic material base is used: for example, a ceramic paper, a glass fiber, aluminum, polypropylene, polyolefin, an activated carbon fiber, a Japanese paper or various nonwoven fabrics.

To add deodorizing and antibacterial properties to the air cleaning filer 2, a catalyser, such as titan, manganese, silver, palladium, platinum, cobalt, or copper is applied to the surface of the material base.

Further, to add absorption property and water-absorption property to the air cleaning filter 2, an absorbent agent, such as zeolite, silica, alumina, or activated carbon is applied to the surface of the material base.

Meanwhile, in some cases, electric charges are incorporated into the air cleaning filter 2 to form an electret filter, to add dust collection function to the air cleaning filter 2.

Further, in some other cases, an enzyme, an inorganic salt, or an organic salt is applied to the air cleaning filter, to add allergen-reducing effect to the air cleaning filter 2.

As shown in Fig. 3, the air cleaning filter 2 is fixed upstream of the heat exchanger 1 (an upper-front heat exchanger in this case), and in the recent air conditioner 50, indoor air is suctioned mainly from the direction of the top panel 5, not from the front grille 4. Therefore, the air cleaning filter 2 is located upstream of any of the upper-front heat exchanger, an upper-back heat exchanger, and a lower-front heat exchanger. In any cases, an inflow direction of air is from an upper area of the air cleaning filter 2, and the air inflow angle θ1 into the filter becomes less than 90 degrees.

For comparison, the conventional air cleaning filter 20 is shown in Fig. 4. As described in Fig. 4, the skew angle θ2 of the filter air vent of the conventional air cleaning filter 20 is 90 degrees. Therefore, from the point of view of pressure loss reduction, it is preferable to set the air inflow angle θ1 into the filter to 90 degrees. However, as indicated above, when the air inflow angle θ1 into the filter is less than 90 degrees, and especially when the difference between the skew angle θ2 of the filter air vent and the air inflow angle θ1 into the filter is greater than 20 degrees, the power consumption in the air conditioner 50 is adversely affected due to pressure loss at a wall surface of the air cleaning filter 20.

When the air inflow angle θ1 into the filter is equal to or less than 70 degrees in the conventional air cleaning filter 20, pressure loss can be reduced by enlarging a hole diameter of air vents 21.

However, in general, the air cleaning ability such as dust collection or deodorizing is given by the product of a volume of passing air that is treated, and a transient removal efficiency. Therefore, to enlarge the hole diameter of the air vents results in reduction of a contact area of the filter with polluted air, and the transient removal efficiency is significantly deteriorated. As a result, it is undesirable since the air cleaning ability is deteriorated.

Therefore, it is preferable to tilt the skew angle θ2 of the filter air vent to be equal to the air inflow angle θ1 into the filter as described in the present embodiment. However, when the air inflow angle θ1 into the filter is excessively small, and it is impossible to set the skew angle θ2 of the filter air vent as small as the air inflow angle θ1 into the filter due to manufacturing reasons of the filter, it is only necessary to make the skew angle θ2 of the filter air vent as close as possible in value to the air inflow angle θ1 into the filter. Further, by setting the difference between the skew angle θ2 of the filter air vent and the air inflow angle θ1 into the filter equal to or less than 20 degrees, it is possible to make the effect of pressure loss vanishingly small.

As illustrated in a diagram of Fig. 5 showing the relation between the skew angle θ2 of the filter air vent and a power consumption increase of the air conditioner 50 when the air inflow angle θ1 into the filter is 30 degrees and the overall air volume of the air conditioner 50 is 16.9 m³/min, when the skew angle θ2 of the filter air vent is 90 degrees, air collides against the wall surface of the filter, or skims the filter surface, which results in large pressure loss at the air cleaning filter 2. Therefore, a large amount of electricity becomes necessary to obtain the same amount of air, and the power consumption increases by approximately 5.0 W compared to a case without the air cleaning filter 2. However, by setting the skew angle θ2 of the filter air vent to 45 degrees to have an angular difference with respect to the air inflow angle θ1 into the filter equal to or less than 20 degrees, it is possible to reduce the power consumption increase due to installation of the air cleaning filter 2 to a littler over 1.0 W.

By inclining the air cleaning filter 2 at the skew angle θ2 of the filter air vent, inflow of air into the filter is improved. However, when the shape of the air cleaning filter 2 is rectangular parallelepiped, blocked parts 30 where air does not pass through are formed at both ends of the air cleaning filter 2 (the top and the bottom in Fig. 6) according to how much the air cleaning filter 2 is inclined, as shown in Fig. 6 for example.

When the filter thickness is A mm, air cannot pass through the air vents 8 in a cross-sectional area of A² mm², which does not contribute to an air cleaning function and becomes a loss.

As shown in Fig. 3, by making the skew angle θ2a of the filter top incline at 20 to 70 degrees in the same direction as the skew angle θ2 of the filter air vent, it is possible to remove the air vents 8 having air outlets but not having air inlets, and to remove one of the blocked parts 30. In this case, since the filter bottom 9 does not incline, a cross-sectional shape of the air cleaning filter 2 is a trapezium.

Further, by making the skew angle θ2b of the filter bottom incline at 20 to 70 degrees in the same direction as the skew angle θ2 of the filter air vent, it is possible to remove the air vents 8 having air inlets but not having air outlets. Since all the air flowing into the filter passes through the filter downstream, it is possible to remove the other of the blocked parts 30. In this case, since the filter top 10 does not incline, a cross-sectional shape of the air cleaning filter 2 is a trapezium.

When the skew angle θ2a of the filter top and the skew angle θ2b of the filter bottom are the same value, cutting direction is the same in processing the filter top and the filter bottom, which enables a high yield and a high production efficiency. Further, by making each of the skew angle θ2a of the filter top and the skew angle θ2b of the filter bottom equal to the skew angle θ2 of the filter air vent, the skew angle θ2a of the filter top and the skew angle θ2b of the filter bottom become equal to the airflow angle, in which shape the filter has the smallest loss. In this case, the cross-sectional shape of the air cleaning filter 2 is parallelogram.

Fig. 7 is a diagram showing the relation of the skew angles at the filter top 10 and the filter bottom 9 to the air cleaning ability, when the skew angle θ2 of the filter air vent is 45 degrees under the same filter volume, with 100% representing the air cleaning ability at the time when the skew angle θ2a of the filter top and the skew angle θ2b of the filter bottom are 45 degrees. In Fig. 7, when the skew angle θ2a of the filter top and the skew angle θ2b of the filter bottom are 90 degrees, the blocked parts 30 where air does not pass through are formed as shown in Fig. 6, so that the air cleaning ability lowers to approximately 75% compared to a case in which the skew angle θ2a of the filter top and the skew angle θ2b of the filter bottom are 45 degrees.

Therefore, the best performance is given by inclining the both ends of the filter top 10 and the filter bottom 9 as well as the air vents 8 of the air cleaning filter 2.

However, depending on processing equipment in a manufacturing site of the air cleaning filter 2, it may be difficult to incline and cut the air cleaning filter 2, and in some cases, the processing cost of the filter becomes higher than in a case of cutting the air cleaning filter 2 in a conventional vertical direction. In order to reduce the processing cost, it may be possible to set either one of the skew angle θ2a of the filter top or the skew angle θ2b of the filter bottom to 90 degrees, and the other to 20 to 70 degrees. When producing the air cleaning filter 2 as above, one having a width twice the size of a specified size, of which the filter top 10 and the filter bottom 9 are processed to incline, is produced, and then is vertically halved at a center. In this way, it is possible to produce two filters while reducing one sloping processing, and in some cases, to obtain reduction effect of the processing cost.

Further, as shown in the cross-sectional view of the air cleaning filter retaining frame 3 in Fig. 8, the air cleaning filter 2 is retained inside of the air conditioner by the air cleaning filter retaining frame 3 separately provided upstream of the heat exchanger 1, or the air cleaning filter retaining frame 3 integrally formed with the panel. In a conventional air cleaning filter retaining frame, draft blows in a vertical direction to the heat exchanger 1. Further, to retain a conventional air cleaning filter 20 (refer to Fig. 4) cut its outer shape in a vertical direction, the air cleaning filter 2 is retained by a wall or a rib established in a vertical direction.

In the present embodiment, since the skew angle of the filter air vent of the air cleaning filter 2 is set to 20 to 70 degrees, and either one of the ends of the filter top 10 or the filter bottom 9 of the air cleaning filter 2 inclines in 20 to 70 degrees with respect to the opposing heat exchanger 1, it is preferable to incline and retain the end of the top of the filter retaining frame 32 or the bottom of the filter retaining frame 31 of the air cleaning filter retaining frame 3 at an angle of 20 to 70 degrees in accordance with the ends of the filter top 10 or the filter bottom 9 of the air cleaning filter 2. Thus, air flows into the air cleaning filter 2 without being affected by pressure loss due to the air cleaning filter retaining frame 3, so that loss reduction effect created by inclining the both ends of the air cleaning filter 2 (the filter top 10 and the filter bottom 9) is not impaired. Further, especially at the top of the filter retaining frame 32, by establishing a triangle space with the skew angle θ3 of the filter retaining frame between the heat exchanger 1 and the air cleaning filter 2, air flows under the air cleaning filter 2 smoothly flows into the heat exchanger 1 without being affected by the pressure loss due to the air cleaning filter retaining frame 3.

Further, by making the skew angle θ2a of the filter top and the skew angle θ2b of the filter bottom of the air cleaning filter 2 equal to the skew angle θ3 of the filter retaining frame, it is possible to prevent air from flowing into an area except the air cleaning filter 2. However, when it is impossible to tilt the skew angle θ3 of the air cleaning filter retaining frame 3 due to manufacturing reasons of a die etc., it is not necessary to make the angles equal to one another. In this case, however, so as not to block the air vents 8 of the air cleaning filter 2 by the air cleaning filter retaining frame 3 as much as possible, it is necessary to elaborate in such a manner as, for example, to convexly establish a holding rib on a front surface and a back surface of the filter at only a partly limited area, and not to hold the air cleaning filter 2 by a linear rib.

Fig. 9 is the enlarged front view of the air vents 8 of the air cleaning filter 2. As indicated above, the air cleaning ability is given by the product of a volume of passing air that is treated, and a transient removal efficiency. Therefore, in the viewpoint of improvement of the transient removal efficiency, a small hole diameter is desirable as for the hole diameter of the air vents 8 of the air cleaning filter 2. However, in the air conditioner 50 wherein the air inflow angle θ1 into the filter is less than 70 degrees, depending on an air flow pattern, use of the air cleaning filter 2 wherein the hole diameter is set to have equal to or more than 300 cells per square inch is often accompanied by air skimming the filter surface and reduction of the volume of the passing air. On the contrary, when the hole diameter is set to have less than 120 cells per square inch, the contact area between the filter and air is insufficient, so that the transient removal efficiency declines significantly. Specifically, when the air inflow angle θ1 into the filter is less than 45 degrees, these phenomena are significant. In the air conditioner 50 where air enters the filter on a skew at the air inflow angle θ1 into the filter, it is preferable to set the hole diameter to have 120 to 300 cells per square inch.

As indicated above, when the air inflow angle θ1 into the filter with respect to the air cleaning filter 2 is equal to or less than 70 degrees, by setting the skew angle θ2 of the filter air vent of the air vents 8 to 20 to 70 degrees in accordance with the air inflow angle θ1 into the filter, air passes through the wall surface of the air cleaning filter 2 without colliding against the wall surface, which allows for reduction of the pressure loss in the air cleaning filter 2. In this case, when the skew angle θ2 of the filter air vent is equal to the air inflow angle θ1 into the filter with respect to the air cleaning filter 2, the pressure loss in the air cleaning filter 2 becomes the smallest, and the power consumption in the air conditioner 50 becomes the smallest.

Furthermore, in the air cleaning filter 2 according to the present embodiment, the skew angle θ2a of the filter top and the skew angle θ2b of the filter bottom are also set to 20 to 70 degrees in accordance with the skew angle θ2 of the filter air vent. Therefore, there are effects of reducing the blocked parts 30 where air does not pass through as much as possible, reducing the pressure loss, and obtaining the maximum air cleaning ability at the minimum volumetric capacity. Since the air cleaning filter 2 does not include parts where air does not pass through, there is no need to unnecessarily increase the filter volume, and the air cleaning filter 2 can be formed at low cost. The cross-sectional shape of the air cleaning filter 2 is a trapezium or parallelogram; however, by forming a parallelogram by making the skew angle θ2 of the filter air vent equal to the skew angle θ2a of the filter top and the skew angle θ2b of the filter bottom, the most effective use of the filter is possible.

Furthermore, by tilting the skew angle θ3 of the filter retaining frame at the both ends of the air cleaning filter retaining frame 3 as well in accordance with the outer shape of the air cleaning filter 2, there is an effect that the pressure loss due to the air cleaning filter retaining frame 3 can be minimally suppressed.

The air conditioner according to the present invention has an effect to reduce the pressure loss of the air cleaning filter by inclining the air vents of the air cleaning filter in an inflow direction of indoor air flowing into the air cleaning filter.

Having thus described several particular embodiments of the present invention, various alterations, modifications, and improvements will readily occur to those skilled in the art. Such alterations, modifications, and improvements are intended to be part of this disclosure, and are intended to be within the spirit and scope of the present invention. Accordingly, the foregoing description is by way of example only, and is not intended to be limiting. The present invention is limited only as defined in the following claims and the equivalents thereto.

## Claims

1. An air conditioner comprising:
a heat exchanger to condition indoor air; and
an air cleaning filter having a honeycomb structure that is formed by linking a plurality of air vents, the air cleaning filter being located upstream of the heat exchanger, wherein
an inflow angle of the indoor air flowing into the air cleaning filter is acute, and
the plurality of air vents of the air cleaning filter incline in an inflow direction of the indoor air flowing into the air cleaning filter.

2. The air conditioner as claimed in claim 1, wherein
at least one of both ends of the air cleaning filter, which faces the indoor air flowing into the air cleaning filter, inclines at a same angle as the plurality of air vents.

3. The air conditioner as claimed in claim 1 or claim 2, wherein
an inflow angle of the indoor air flowing into the air cleaning filter is equal to or less than 70°, and
the plurality of air vents of the air cleaning filter incline at a 20 to 70 degree angle.

4. The air conditioner as claimed in any one of claims 1 through 3, wherein
a difference between an inflow angle of the indoor air flowing into the air cleaning filter and a skew angle of the plurality of air vents of the air cleaning filter is equal to or less than 20°.

5. The air conditioner as claimed in any one of claims 1 through 4, wherein
a hole diameter of the plurality of air vents of the air cleaning filter is set to have 120 to 300 cells per square inch.

6. The air conditioner as claimed in any one of claims 2 through 5, further comprising
a retaining frame for an air cleaning filter to retain the air cleaning filter, wherein
shapes of both ends of the retaining frame for the air cleaning filter, which faces the indoor air flowing into the air cleaning filter, are formed in accordance with a shape of the air cleaning filter.
